# EUROPÄISCHE PATENTANMELDUNG

(11) **EP 1 065 110 A1**
(43) Veröffentlichungstag der Anmeldung: **03.01.2001**
(21) Anmeldenummer: 00112536.8
(22) Anmeldetag: 14.06.2000
(51) Int. Cl.: B60R 21/20

(54) **Lenkrad mit Airbag-Modul**

(30) Priorität: 29.06.1999 DE 19929963
(71) Anmelder: Firma Carl Freudenberg, 69469 Weinheim (DE)
(72) Erfinder: Hönlinger, Herwig, 68649 Gross-Rohrheim (DE); Grunau, Rudi, 79395 Neuenburg (DE)

(57) **Zusammenfassung**

Lenkrad mit einem in seinem Mittelteil eingefügten Airbag-Modul (4) aus Airbag-Behälter (5) mit Airbag (6) und Gasgenerator (7), bei dem am Airbag-Behälter (5) ein Schwingungstilger ist, wobei die Trägheitsmasse des Schwingungstilgers durch den Gasgenerator (7) gebildet ist, dadurch gekennzeichnet, daß der Gasgenerator (7) von elastischen Verbindungselementen (11) gehalten beweglich innerhalb des Airbag-Behälters (5) eingesetzt ist.

## Beschreibung

### Technisches Gebiet

Die bei Kraftfahrzeugen auftretenden Schwingungen, sei es während der Fahrt oder auch im Stillstand mit laufendem Motor, können sich auf die Lenksäule übertragen und von dort aus auf das Lenkrad. Um diesen Schwingungen am Lenkrad entgegenzuwirken, ist es bekannt an der Lenksäule, beziehungsweise am Mittelteil des Lenkrads einen Schwingungstilger anzubringen, um dadurch die auftretenden Schwingungen aufzuheben. Die Anbringung eines Schwingungstilgers bei einem Lenkrad mit Airbag, stößt jedoch auf Anordnungs- und Platzprobleme.

### Stand der Technik

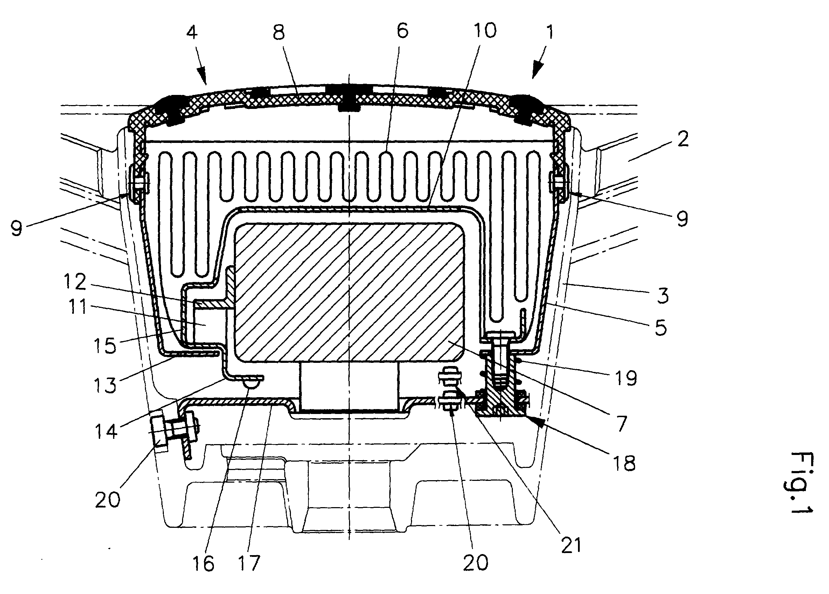

Aus der DE 39 25 761 A1 ist ein Schwingungstilger für ein Lenkrad mit einem Airbag bekannt, bei dem entweder das Airbag-Modul, dort als Luftsackeinheit bezeichnet, oder ein Teil des Airbag-Moduls als Trägheitsmasse verwendet werden. Die dort in den Figuren 1 und 2 beschriebene Anordnung eines Schwingungstilgers für ein Lenkrad mit Airbag besteht im wesentlichen aus dem Lenkradkörper und dem Airbag-Modul. Das Airbag-Modul besteht aus einem Gehäuse, einem in dem Gehäuse angeordneten Airbag und einem mit dem Gehäuse starr verbundenen Gasgenerator. Über elastische Mittel ist das Airbag-Modul mit einem Träger und damit mit der Lenkradsäule verbunden. Das Airbag-Modul bildet die Trägheitsmasse des Schwingungstilgers.

Die Figur 3 beschreibt eine alternative Ausführungsform eines solchen Schwingungstilgers, bei dem nur ein Teil des Airbag-Moduls, nämlich der Gasgenerator, durch elastische Mittel mit dem Lenkradkörper verbunden ist und die Trägermasse bildet. Diese Ausführungsform wird jedoch als nachteilig angesehen, weil die Bewegungen des Gasgenerators den darüber liegenden Airbag beschädigen können. Deshalb wird ein aus einem Draht nachgefertigtes Abdeckteil eingesetzt, welches starr am Airbag-Gehäuse befestigt ist, den Gasgenerator abdeckt und den Airbag abstützt. Auf diese Weise werden Airbag und Gasgenerator daran gehindert, miteinander in Kontakt zu kommen. Unklar bleibt bei dieser Anordnung, wie bei den Befestigungsstellen von Gasgenerator und Airbag-Gehäuse der zwangsläufig vorhandene Spalt, durch welchen die Explosionsgase bei der Auslösung des Airbags entweichen können, geschlossen wird.

### Darstellung der Erfindung

Der Erfindung liegt die Aufgabe zugrunde, hier Abhilfe zu schaffen und bei einem Lenkrad mit Airbag eine Dämpfung der Schwingungen zu erreichen, wobei die Explosionsgase an einem unkontrollierten Entweichen gehindert werden.. Die Lösung der gestellten Aufgabe wird bei einem Lenkrad mit einem in seinem Mittelteil eingefügten Airbag-Modul mit Airbag und Gasgenerator, bei dem am Airbag-Behälter ein Schwingungstilger angeordnet ist, und die Trägheitsmasse des Schwingungstilgers durch den Gasgenerator des Airbags gebildet wird erfindungsgemäß dadurch erreicht, daß der Gasgenerator von elastischen Verbindungselementen gehalten, beweglich im Airbag-Behälter eingesetzt ist. Der Schwingungstilger wird dabei unterhalb des Airbags angeordnet und am Boden oder auch am Seitenmantel des Airbag-Behälters befestigt. Eine solche Anordnung des Schwingungstilgers ergibt eine elegante Lösung hinsichtlich des Platzbedarfs und ist auch äußerst wirksam in bezug auf die Schwingungsdämpfung. Bei dieser Lösung entfallen die sonst üblichen zusätzlichen Tilgermassen welche bisher das Gewicht des Lenkrads erhöht haben. Da der Gasgenerator nicht mehr starr am Airbag-Behälter befestigt ist, sondern über die elastischen Verbindungselemente gehalten wird, kann der Airbag-Behälter selbst nicht in Schwingungen versetzt werden, was eine optische Beeinträchtigung am Behälterdecket zur Folge haben könnte. Der gasgenerator und die Verbindungselemente befinden sich innerhalb des Airbag-Behälters.

Die elastischen Verbindungselemente der Trägheitsmasse werden in an sich bekannter Weise aus einem elastomeren Werkstoff hergestellt. Die Verbindung der Elemente mit der Trägheitsmasse beziehungsweise dem Airbag-Behälter kann durch verkleben erfolgen, vorzugsweise durch Anvulkanisieren. Dabei können bei Bedarf auch Zwischenträger eingesetzt werden.

Das Airbag-Modul wird mit vorgegebenem Abstand und axial beweglich mittels Distanzschrauben und Rückstellfedern am Topfboden des Lenkrads befestigt. Der Airbag-Behälter besteht dabei aus einem starren Seitenmantel mit Boden- und einer Abdeckplatte. Die Distanzschrauben werden in den Behälterboden und in den Topfboden des Lenkrads beziehungsweise einem dort eingezogenen Zwischenboden angebracht. Es sind mindestens drei Distanzschrauben auf dem Umfang des Behälterbodens verteilt. Auf die Distanzschrauben sind Rückstellfedern aufgesetzt, welche den Behälterboden in Abstand vom Zwischenboden beziehungsweise Topfboden halten. Im Behälterboden und im Zwischenboden sind die Kontakte für die Fahrzeughupe angebracht, so daß bei einem Druck auf die Airbag-Kappe die Rückstellfedern nachgeben und die Fahrzeughupe betätigt wird.

Die Abtrennung des Gasgenerators vom Airbag-Behälter führt dazu, daß zwischen dem Gasgenerator und dem Airbag-Behälter ein Spalt entsteht, durch welchen die Explosionsgase bei der Auslösung des Airbags entweichen könnten.

Um trotz einer beweglichen Anordnung des Gasgenerators im Airbag-Behälter eine sichere Abdichtung zu erreichen, wird der Boden des Airbag-Behälters auf seiner Unterseite mit einer umlaufenden elastischen Dichtwulst versehen, die bei Zündung des Gasgenerators abdichtend auf dem Topfboden des Lenkrads oder dem Zwischenboden anliegt.

Der Gasgenerator und die daran befestigten Verbindungselemente werden von einer Abdeckkappe eingefaßt, die in ihrem dem Airbag zugewandten Oberteil gelocht ist. Die Abdeckkappe verhindert, daß die heißen Explosionsgase direkt auf den Airbag prallen und ihn schädigen können. Diese Abdeckkappe kann mit einem flanschartigen Unterteil versehen sein und mit diesem die Unterseite des Gasgenerators zumindest teilweise umschließen. An diesem Flansch ist dann die Dichtwulst angebracht, die nach Zündung des Generators am Topfboden des Lenkrads beziehungsweise am Zwischenboden anliegt und den Gasgeneratorraum abdichtet. Außerdem können am Flansch die elastischen Verbindungselemente angebracht sein, welche den Gasgenerator als Trägheitsmasse halten.

### Kurzbeschreibung der Zeichnung

Anhand eines in der Zeichnung dargestellten Ausführungsbeispiels wird die Erfindung näher erläutert.

### Ausführung der Erfindung

In der Figur ist der Mittelteil 1 eines Lenkrads 2 im Schnitt dargestellt. Das Lenkrad 2 ist lediglich gestrichelt angedeutet. Das Lenkrad 2 hat in seiner Mitte einen Topf 3, in den das Airbag-Modul 4 eingesetzt ist. Das Airbag-Modul 4 besteht aus einem Airbag-Behälter 5, dem Airbag 6 und dem Gasgenerator 7. Am Oberteil des Behälters 5 befindet sich eine Kappe 8, die beim Entfalten des Airbag 6 weggesprengt wird. Die Kappe 8 ist über die Nieten 9 mit dem Behälter 5 verbunden.

Zwischen dem Airbag 6 und dem Gasgenerator 7 befindet sich die Abdeckkappe 10, die mit Löchern für den Durchtritt der Gase während der Zündung des Airbags versehen ist. Die Abdeckkappe 10 schützt den Airbag 6 vor möglichen Beschädigungen durch zu heiße Gase aus dem Gasgenerator 7.

Der Gasgenerator 7 ist beweglich angeordnet. Er wird von drei auf seinem Umfang verteilten Stützen 11 getragen. Dabei sind zwischen den Stützen 11 und dem Gasgenerator 7 Winkelelemente 12 eingefügt. Die Stützen 11 stellen die elastischen Verbindungselemente zwischen dem Airbag-Behälter 5 und dem Gasgenerator 7 dar. Sie bestehen aus einem elastomeren Material. Die Winkelelemente 12 sind am Gasgenerator 7 und an den Verbindungselementen 11 angeklebt.

Der Boden 13 ist mit einer Öffnung versehen, in welche die Unterseite 14 der Abdeckkappe 10 hineinreicht. Die Abdeckkappe 10 umgreift folglich fast vollständig den Gasgenerator 7. Im Bereich der Stützen 11 hat die ansonsten runde Abdeckkappe 10 Auswölbungen 15, mit denen sie am Boden 13 des Behälters 5 anliegt. Zwischen Boden 13 und Auswölbungen 15 ist der Rand des Airbags 6 eingeklemmt. Der innenliegende Rand des Bodens 14 ist mit einer rundumlaufenden Wulst 16 ausgestattet. Bei einer Zündung des Airbags liegt die Wulst 16 am dem Zwischenboden 16 dichtend an.

Der Airbag-Behälter 5 ist über die Distanzschrauben 18 mit den Rückstellfedern 19 an dem Zwischenboden 17 befestigt. Durch die Distanzschrauben 18 und die Rückstellfedern 19 wird das Airbag-Modul 4 im Abstand von dem Zwischenboden 17 gehalten. Durch einen Druck auf die Kappe 8 geben die Federn nach und die Kontakte 20 und 21 kommen zum Anliegen und die Hupe wird betätigt. Der Zwischenboden 17 schließt den Raum unterhalb des Airbag-Moduls 4 ab. Seinerseits ist der Zwischenboden 17 über die Schrauben 22 mit dem Lenkradtopf 3 fest verbunden.

## Patentansprüche

1. Lenkrad mit einem in seinem Mittelteil eingefügten Airbag-Modul aus Airbag-Behälter mit Airbag und Gasgenerator, bei dem am Airbag-Behälter ein Schwingungstilger ist, wobei die Trägheitsmasse des Schwingungstilgers durch den Gasgenerator gebildet ist, **dadurch gekennzeichnet**, daß der Gasgenerator (7) von elastischen Verbindungselementen (11) gehalten beweglich innerhalb des Airbag-Behälters (5) eingesetzt ist.

2. Lenkrad nach Anspruch 1, dadurch gekennzeichnet, daß das Airbag-Modul (4) mit vorgegebenem Abstand und axial beweglich mittels Distanzschrauben (18) und Rückstellfedern (19) am Topfboden des Lenkrads (2) oder einem Zwischenboden (17) befestigt ist.

3. Lenkrad nach einem der Ansprüche 1 oder 2, dadurch gekennzeichnet, daß der Gasgenerator (7) auf seiner Unterseite vom Boden (13) des Airbag-Behälters (5) zumindest teilweise überdeckt ist.

4. Lenkrad nach einem der Ansprüche 1 bis 3, dadurch gekennzeichnet, daß der Boden (13) des Airbag-Behälters (5) auf seiner Unterseite mit einer umlaufenden elastischen Dichtwulst (16) versehen ist, die bei Zündung des Gasgenerators (7) abdichtend an den Topfboden des Lenkrads (2) oder einem Zwischenboden (17) anliegt.

5. Lenkrad nach einem der Ansprüche 1 bis 4 dadurch gekennzeichnet, daß der Gasgenerator (7) und die daran befestigten Verbindungselemente (11) von einer Abdeckkappe (10) eingefaßt sind, die in ihrem dem Airbag (6) zugewandten Oberteil gelocht ist.

6. Lenkrad nach einem der Ansprüche 1 bis 5, dadurch gekennzeichnet, daß die Abdeckkappe (10) die Unterseite des Gasgenerators (7) zumindest teilweise umschließt und mit einer Dichtwulst (16) versehen ist, die nach Zündung des Generators (7) am Topfboden des Lenkrads (2) oder einem Zwischenboden (17) abdichtend anliegt.
